Europäisches Patentamt

European Patent Office

Office européen des brevets

(11) Veröffentlichungsnummer: **0 280 099**
**B1**

(12) **EUROPÄISCHE PATENTSCHRIFT**

(45) Veröffentlichungstag der Patentschrift:
09.05.90

(51) Int. Cl.⁵: **B61F 5/30, B61F 5/32**

(21) Anmeldenummer: 88101723.0

(22) Anmeldetag: 06.02.88

(54) **Laufwerkfederung für Schienenfahrzeuge.**

(30) Priorität: 13.02.87 DE 3704492

(43) Veröffentlichungstag der Anmeldung:
31.08.88 Patentblatt 88/35

(45) Bekanntmachung des Hinweises auf die Patenterteilung:
09.05.90 Patentblatt 90/19

(84) Benannte Vertragsstaaten:
AT CH DE FR IT LI

(56) Entgegenhaltungen:
DE-A- 2 105 162
DE-B- 1 142 895
DE-B- 1 230 834
DE-U- 1 861 536
FR-A- 2 171 117

(73) Patentinhaber: Waggonfabrik Talbot, Jülicher Strasse 213-237, D-5100 Aachen(DE)

(72) Erfinder: Collienne, Franz-Joseph, Oestr. 95,
B-4700 Eupen(BE)
Erfinder: Corsten, Leonhard, Max-Planck-Strasse 4,
D-5120 Herzogenrath(DE)
Erfinder: Jakob, Jürgen, Dipl.-Ing., Schönrathstrasse 27,
D-5100 Aachen(DE)
Erfinder: Nicolin, Johannes, Dr.-Ing., Kohlweg 2,
D-5100 Aachen(DE)
Erfinder: Müller, Lothar, Dr.-Ing., Bremer Strasse 24D,
D-3016 Seelze(DE)

(74) Vertreter: Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)

## Beschreibung

Die Erfindung betrifft eine Laufwerkfederung für Schienenfahrzeuge mit zwei in Reihe geschalteten Federn und einem lastabhängigen Reibungsdämpfer.

Derartige Laufwerfederungen sind in verschiedenen Ausführungen bekannt (siehe z.B. die DE-U 1 861 536). Um die Dämpfung des lastabhängigen Reibungsdämpfers in Abhängigkeit von der Beladung des Schienenfahrzeuges zu verändern, sind bei den bekannten Konstruktionen aufwendige Mechanismen erforderlich, die die aus der jeweiligen Last resultierende Kraft auf die Reibflächen des Reibungsdämpfers umlenken.

Der Erfindung liegt die Aufgabe zugrunde, eine Laufwerkfederung der eingangs beschriebenen Art zu schaffen, die ohne komplizierte, verschleißbehaftete und damit in Unterhalt aufwendige Kraftumlenkung zur Erzeugung der Dämpfungskräfte arbeitet, wobei die Dämpfungskräfte außerdem in ihrer Größe einstellbar und lastabhängig sein sollen.

Die Lösung dieser Aufgabenstellung durch die Erfindung ist dadurch gekennzeichnet, daß beide Federn quer zur Hauptfederungsrichtung unter Beanspruchung ihrer quer zur Hauptfederungsrichtung wirksamen Federungseigenschaften vorgespannt sind und diese Vorspannkraft zur Erzeugung von Reibkräften, die nur eine Feder lastabhängig dämpfen, herangezogen wird.

Bei der erfindungsgemäßen Ausbildung werden die quer zur Hauptfederungsrichtung wirksamen Federungseigenschaften durch eine entsprechende Vorspannung der Federn zur Erzeugung der Reibkraft herangezogen, die im Reibungsdämpfer die gewüschte Dämpfung der Federung bewirken. Hierbei entfällt eine aufwendige Kraftumlenkung, da die durch die Vorspannung erzeugte Kraft in der für die Reibkrafterzeugung benötigten Richtung wirksam wird. Gummifedern haben aufgrund der Werkstoffeigenschaften eine gewisse Eigendämpfung; diese reicht aber nicht in allen Fällen aus, um insbesondere auf hohem Niveau liegende Schwingungen ausreichend zu dämpfen, so daß eine zusätzliche Dämpfung mittels eines Reibungsdämpfers erforderlich wird.

Da bei der erfindungsgemäßen Laufwerkfederung eine Vorspannung der beiden Federn quer zu ihrer Hauptfederungsrichtung zur Erzeugung der Reibkräfte herangezogen wird, sind die erzeugten Reibkräfte abhängig von der Belastung der Federn, so daß sich ohne zusätzlichen Aufwand eine lastabhängige Dämpfung ergibt.

Weil diese Dämpfung erfindungsgemäß nur auf eine der beiden Federn wirkt, wird das Ansprechverhalten der anderen Feder auch bei einer sehr starken Dämpfung aufgrund hoher Last nicht beeinträchtigt, so daß die erfindungsgemäße Laufwerkfederung in jedem Betriebszustand feinfühlig arbeitet, obwohl die Dämpfungswirkung aufgrund einer trockenen Reibung erzielt wird, die bei den bekannten Konstruktionen zu einem unerwünschten Blockieren der Federung führt.

Durch Auswahl von Werkstoffen mit geeigneten Reibwerten, Ausbildung der Größe und Anzahl der beim Einfedern wirksamen Reibflächen und Einstellen der Höhe der Vorspannkraft läßt sich die Dämpfungswirkung der erfindungsgemäßen Laufwerkfederung den jeweiligen Anforderungen optimal anpassen.

Ein weiterer wesentlicher Vorteil der Erfindung ist schließlich darin zu sehen, daß die Dämpfung auch bei Bewegungen des Radsatzes quer fur Fahrtrichtung, d.h. bei den sogenannten seitlichen Anlaufstößen wirksam wird, ohne die horizontale Bewegungsmöglichkeit des Radsatzes in Fahrtrichtung zwecks Einstellung bei Kurvenfahrt zu behindern.

Gemäß einem weiteren Merkmal der Erfindung sind die Federn übereinander angeordnet und zur Vorspannung der Federn die zwischen beiden Federn liegende untere Abstützung der oberen Feder und obere Abstützung der unteren Feder gegenüber der oberen Abstützung der oberen Feder und der unteren Abstützung der unteren Feder quer zur Hauptfederungsrichtung und in Fahrtrichtung versetzt. Hierbei ist es möglich, die Vorspannung dadurch zu erzielen, daß die Abstützungen jeder Feder parallel zueinander versetzt sind. Alternativ besteht die Möglichkeit, die übereinander angeordneten Federn gegenüber der Hauptfederrichtung jeweils um einen spitzen Winkel in entgegengesetzter Richtung zu verschwenken, wodurch sich ebenfalls der erforderliche Versatz zwecks Vorspannung der Federn quer zur Hauptfederungsrichtung ergibt.

Bei einer erfindungsgemäßen Weiterbildung sind die zwischen den Federn liegenden, mit der Vorspannkraft belasteten Abstützungen mittels mindestens einer Reibplatte gegenüber dem Laufwerkrahmen und/oder mittels eines in Laufwerkrahmen quer zur Hauptfederungsrichtung verschiebbar gelagerten Stößels gegenüber dem Achslagergehäuse abgestützt. Diese Ausbildungen schaffen ausreichende Möglichkeiten zu einer dem jeweiligen Anwendungsfall entsprechenden Ausbildung der Reibflächen.

Bei einer bevorzugten Ausführungsform der Erfindung sind jeweils zwei Federn an beiden Seiten neben dem Achslagergehäuse angeordnet. Hierbei wird erfindungsgemäß mindestens ein Federpaar quer zur Hauptfederungsrichtung vorgespannt und die Vorspannkraft zur Erzeugung von Reibungskräften herangezogen.

Bei der erfindungsgemäßen Laufwerkfederung können die Federn entweder als Wendelfedern aus Stahl oder als Gummirollfedern ausgebildet sein, die jeweils zwischen einem Dorn und einer Glocke angeordnet sind. Schließlich wird mit der Erfindung vorgeschlagen, den Dorn und die Glocke, die zwischen den beiden Gummirollfedern angeordnet sind, miteinander derart zu verbinden, daß diese miteinander verbundenen Teile zusätzlich zur Bewegung in Hauptfederungsrichtung eine Pendelbewegung um eine beliebige, quer zur Hauptfederungsrichtung liegende Achse ausführen können. Hierdurch wird mit geringem Aufwand eine optimale Einstellmöglichkeit des Laufwerkes in Fahrzeuglängs- und -querrichtung gestattet.

Auf der Zeichnung sind vier Ausführungsbeispiele der erfindungsgemäßen Laufwerkfederung dargestellt, und zwar zeigen

Fig. 1 eine teilweise im senkrechten Schnitt dargestellte Seitenansicht eines ersten Ausführungsbeispiels mit zwei übereinander angeordneten Gummirollfedern,

Fig. 2 eine der Fig. 1 entsprechende Darstellung einer hinsichtlich des Reibungsdämpfers abgewandelten Ausführungsform,

Fig. 3 ein drittes Ausführungsbeispiel der Laufwerkfederung unter Verwendung von zwei Paaren von Wendelfedern in einer den Figuren 1 und 2 entsprechenden Darstellung und

Fig. 4 eine der Ausführung nach Fig. 3 entsprechende Konstruktion mit abgewandeltem Reibungsdämpfer.

Sämtliche Ausführungsbeispiele zeigen einen Teil eines Drehgestellrahmes 1, der über jeweils eine Laufwerkfederung auf den Achszapfen mindestens zweier Achsen abgestützt ist. In den Zeichnungen ist jeweils nur ein Rad 2 einer Achse zu erkennen.

Der Drehgestellrahmen 1 wird bei allen vier Ausführungsbeispielen über jeweils zwei Paare von hintereinander geschalteten Federn auf einem den Achszapfen lagernden Achslagergehäuse 3 abgestützt, das zu diesem Zweck an seiner Unterseite mit einem Tragstück 3a versehen ist. Am Achslagergehäuse 3 ist weiterhin eine Aushebsicherung 3b angebracht.

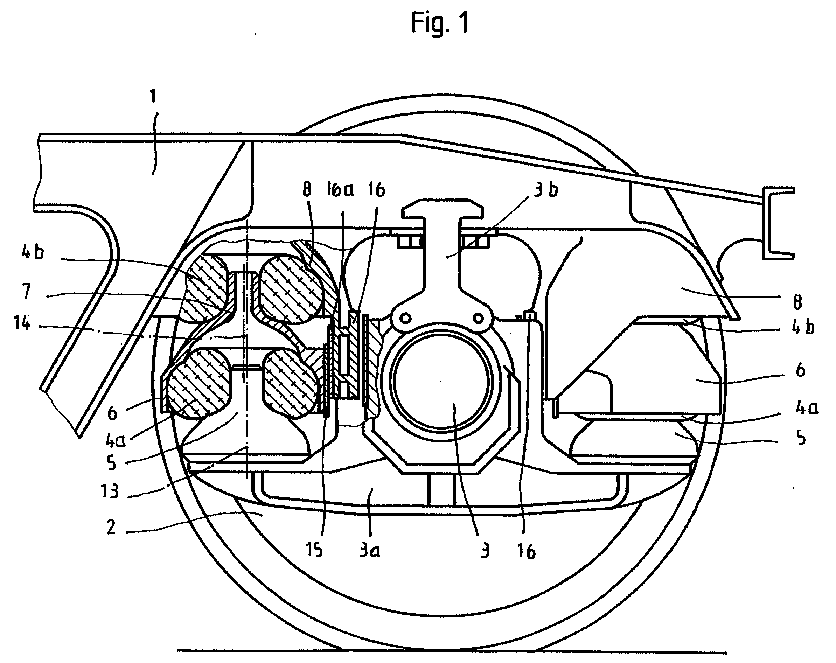

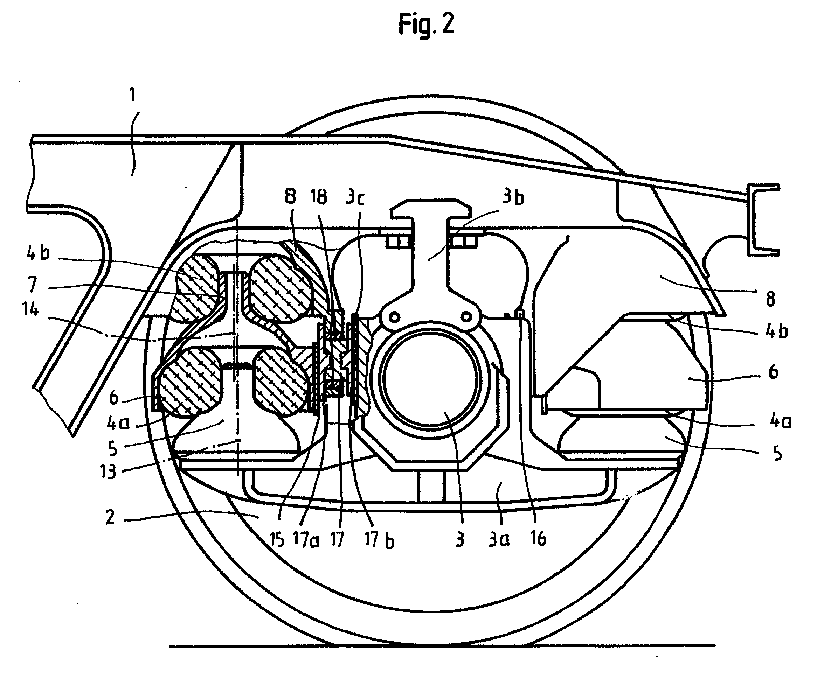

Bei den beiden ersten Ausführungsbeispielen nach den Figuren 1 und 2 wird jedes seitlich neben dem Achslagergehäuse 3 angeordnete Federpaar durch zwei übereinander angeordnete Gummirollfedern 4a,4b gebildet. Die jeweils untere Gummirollfeder 4a ist auf einem als untere Federabstützung wirkenden Dorn 5 angeordnet, der seinerseits auf dem Tragstück 3a des Achslagergehäuses 3 gelagert ist. Die obere Abstützung der Gummirollfeder 4a wird durch eine Glocke 6 gebildet, die mit einem Dorn 7 für die obere Gummirollfeder 4b einstückig ausgebildet ist. Dieser Dorn 7 dient demgemäß als untere Abstützung für die obere Gummirollfeder 4b. Deren obere Abstützung wird wiederum durch eine Glocke 8 gebildet, die fest am Dehgestellrahmen 1 angeordnet ist Auf diese Weise ergibt sich bei den beiden Ausführungsbeispielen nach den Figuren 1 und 2 eine Hintereinanderschaltung des durch die beiden Gummirollfedern 4a und 4b gebildeten Federpaares, das jeweils zu beiden Seiten des Achslagergehäuses 3 angeordnet ist und den Drehgestellrahmen 1 über das Achslagergehäuse 3 auf der Achse abstützt.

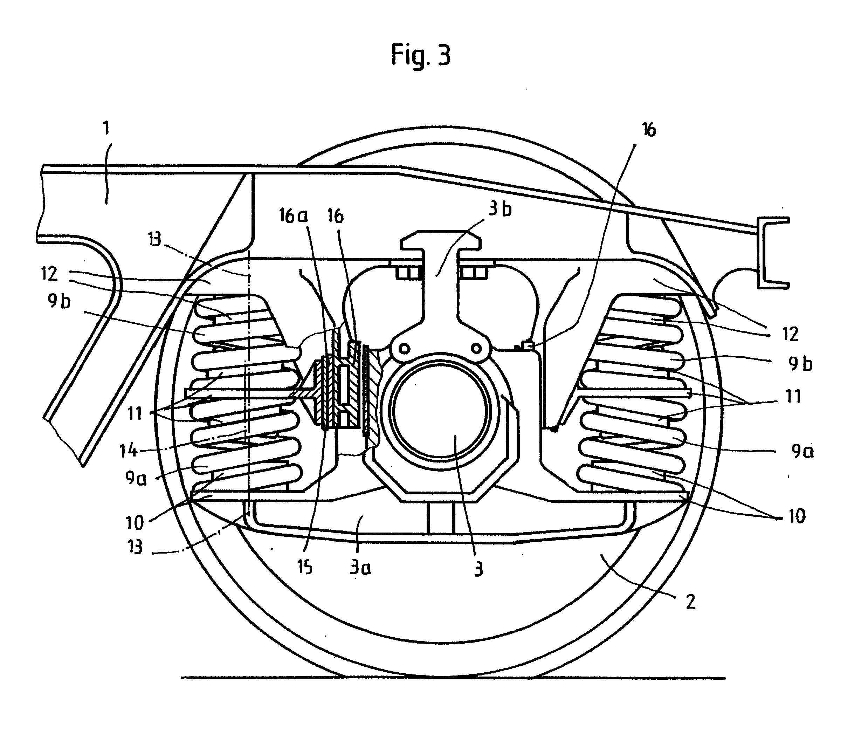

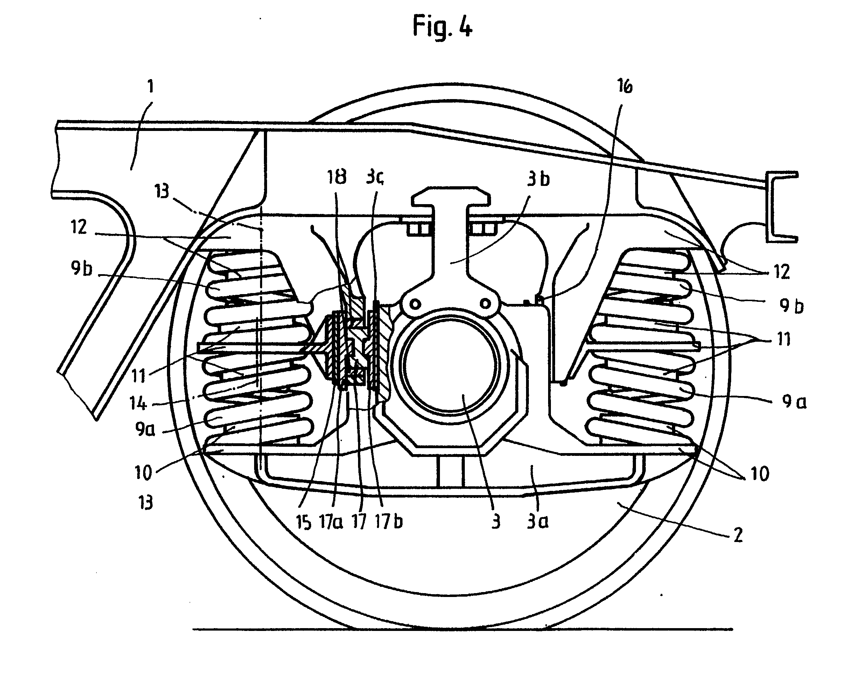

Bei den beiden Ausführungsbeispielen nach den Figuren 3 und 4 sind anstelle der Gummirollfedern 4a und 4b Wendelfedern 9a und 9b aus Stahl verwendet. Auch bei diesen Ausführungen stützt sich die jeweils untere Wendelfeder 9a auf dem Tragstück 3a des Achslagergehäuse 3 ab, das zu diesem Zweck jeweils mit einer Abstützung 10 versehen ist. Die obere Abstützung für die untere Wendelfeder 9a ist zugleich als untere Abstützung für die obere Wendelfeder 9b ausgeführt und wird durch einen Zwischenträger 11 gebildet. Die obere Abstützung 12 für die obere Wendelfeder 9b ist wiederum am Drehgestellrahmen 1 angeordnet. Auch bei diesen beiden Ausführungen ergibt sich somit eine Abstützung des Drehgestellrahmens 1 auf dem Achslagergehäuse 3 durch zwei paarweise angeordnete Federn (Wendelfedern 9a und 9b), wobei diese beiden Wendelfedern 9a und 9b jeweils in Reihe geschaltet sind, die Federpaare jedoch parallel zueinander wirken.

Bei allen vier Ausführungsbeispielen ist bezüglich des linken Federpaares in der Zeichnung die senkrechte Längsmittelachse 13 mit strichpunktierten Linien eingezeichnet. Diese mit der Hauptfederungsrichtung übereinstimmende Längsmittelachse 13 wird jeweils durch die oberste und die unterste Abstützung des Federpaares bestimmt, bei den Ausführungsbeispielen nach den Figuren 1 und 2 demgemäß durch die übereinstimmenden senkrechten Mittelachsen des unteren Dornes 5 und der oberen Glocke 8 und bei den Ausführungsbeispielen nach den Figuren 3 und 4 durch die senkrechte Längsmittelachse der unteren Abstützung 10 sowie der oberen Abstützung 12, die ebenfalls identisch sind.

Wie aus der weiterhin in den Zeichnungen eingezeichneten weiteren senkrechten Achse 14 hervorgeht, ist diese senkrechte Längsmittellinie der oberen Abstützung für die untere Feder 4a bzw. 9a und für die untere Abstützung der oberen Feder 4b bzw. 9b in Fahrzeuglängsrichtung gegenüber der Längsmittelachse 13 versetzt. Dies ergibt sich durch eine entsprechende Verlagerung der ein Teil bildenden Glocke 6 und Dorn 7 bzw. des diese Abstützungen bildenden Zwischenträgers 11. Hierdurch werden beide Federn 4a und 4b bzw. 9a und 9b quer zur Hauptfederungsrichtung unter Beanspruchung ihrer quer zu dieser Hauptfederungsrichtung wirksamen Federeigenschaften vorgespannt. Die Vorspannkraft wird dadurch erzeugt, daß sich die Glocke 6 bzw. der Zwischenträger 11 über eine Reibplatte 15 an einem Achshalter 16 abstützen, der zu beiden Seiten des Achslagergehäuse 3 angeordnet ist und als senkrechte Führung für das Achslagergehäuse 3 dient. Um einen Verschleiß dieses Achshalters 16 zu verhindern, ist der Achshalter 16 im Bereich der Reibplatte 15 mit einem auswechselbaren Reibbelag 16a versehen.

Über die durch die seitliche Verlagerung der Achse 14 gegenüber der Längsmittelachse 13 erzeugte Vorspannung der Federn 4a und 4b bzw. 9a und 9b quer zur Hauptfederungsrichtung werden demgemäß bei jedem Federungsvorgang Reibkräfte zwischen dem mit dem Reibbelag 16a versehenen Achshalter 16 und der Reibplatte 15 erzeugt, die mit der Glocke 6 bzw. mit dem Zwischenträger 11 verbunden ist. Auf diese Weise entsteht ein Reibungsdämpfer, der lastabhängig die Schwingungen der jeweils in Reihe geschalteten Federn 4a und 4b bzw. 9a und 9b dämpft.

Da die geschilderte Dämpfung ausschließlich auf die untere Glocke 6 bzw. den Zwischenträger 11 wirkt, hat der Reibungsdämpfer keinen direkten Einfluß auf die jeweils untere Feder 4a bzw. 9a. Diese Feder 4a bzw. 9a ist somit hinsichtlich ihrer Federungseigenschaften nicht behindert, wenn bei geringer Last und kleinen Federwegen der Reibungsdämpfer eine Bewegung zwischen der unteren Glocke 6 bzw. dem Zwischen träger 11 und dem Achshalter 16 blockiert.

Das zweite Ausführungsbeispiel nach Fig.2 und das vierte Ausführungsbeispiel nach Fig.4 unterscheiden sich vom ersten Ausführungsbeispiel nach Fig.1 bzw. vom dritten Ausführungsbeispiel nach Fig.3 lediglich dadurch, daß die von den quer vorgespannten Federn 4a,4b bzw. 9a, 9b belastete Reibplatte 15 nicht an einem Reibbelag 16a des Achshalters 16 anliegt, sondern an dem Teller 17a eines Stößels 17, der in einer Lagerbuchse 18 im Achshalter 16 verschiebbar geführt ist und die Vorspannkraft auf eine Druckplatte 17b überträgt, die ihrerseits mit einem Reibbelag 3c am Achslagergehäuse 3 zusammenwirkt. Auf diese Weise ergeben sich zwei Reibflächenpaare: zum einen die Reibfläche zwischen der an der Glocke 6 bzw. am Zwischenträger 11 angeordneten Reibplatte 15 und dem Teller 17a des Stößels 17 und zum anderen die zwischen dem Druckteller 17b des Stößels 17 und dem Reibbelag 3c des Achslagergehäuses 3. Hierdurch sind alle Federstufen zusätzlich und abgestuft gedämpft.

Insgesamt bewirken die voranstehend beschriebenen Laufwerkfederungen eine lastabhängige Dämpfung der bei den Ausführungsbeispielen paarweise angeordneten, jeweils aus zwei in Reihe geschalteten Federn 4a,4b bzw. 9a,9b bestehenden Federung, ohne daß aufwendige Kraftumlenkungen zur Erzeugung der Reibkraft erforderlich sind und ohne daß die Gefahr besteht, daß der Reibungsdämpfer bei hoher Belastung und kleinen Federwegen die Federung insgesamt blockiert.

Bezugsziffernliste:

1 Drehgestellrahmen
2 Rad
3 Achslagergehäuse
3a Tragstück
3b Aushebesicherung
3c Reibbelag
4a Gummirollfeder
4b Gummirollfeder
5 Dorn
6 Glocke
7 Dorn
8 Glocke
9a Wendelfeder
9b Wendelfeder
10 Abstützung
11 Zwischenträger
12 Abstützung
13 Längsmittelachse
14 Achse
15 Reibplatte
16 Achshalter
16a Reibbelag
17 Stößel
17a Teller
17b Druckplatte
18 Lagerbuchse

## Patentansprüche

1.Laufwerkfederung für Schienenfahrzeuge mit zwei in Reihe geschalteten Federn und einem lastabhängigen Reibungsdämpfer,
**dadurch gekennzeichnet,**
daß beide Federn (4a,4b; 9a,9b) quer zur Hauptfederungsrichtung unter Beanspruchung ihrer zur Hauptfederungsrichtung wirksamen Federungseigenschaften vorgespannt sind und diese Vorspannkraft zur Erzeugung von Reibkräften, die nur eine Feder (4b,9b) lastabhängig dämpfen, herangezogen wird.

2. Laufwerkfederung nach Anspruch 1, dadurch gekennzeichnet, daß die Federn (4a, 4b; 9a, 9b) übereinander angeordnet sind und zur Vorspannung der Federn die zwischen beiden Federn liegende untere Abstützung (7,11) der oberen Feder (4b,9b) und obere Abstützung (6,11) der unteren Feder (4a,9a) gegenüber der oberen Abstützung (8,12) der oberen Feder (4b,9b) und der unteren Abstützung (5,10) der unteren Feder (4a,9a) quer zur Hauptfederungsrichtung, z.B. in Fahrtrichtung, versetzt sind.

3. Laufwerkfederung nach Anspruch 2, dadurch gekennzeichnet, daß die Abstützungen der beiden Federn (4a,4b; 9a,9b) parallel zueinander versetzt sind.

4. Laufwerkfederung nach Anspruch 2, dadurch gekennzeichnet, daß die übereinander angeordneten Federn (4a, 4b; 9a,9b) gegenüber der Hauptfederrichtung jeweils um einen spitzen Winkel in entgegengesetzter Richtung verschwenkt sind.

Laufwerkfederung nach mindestens einem der Ansprüche 1,2,3 oder 4, dadurch gekennzeichnet, daß die zwischen den Federn (4a, 4b; 9a,9b) liegenden, mit der Vorspannkraft belasteten Abstützungen (6,7; 11) mittels mindestens einer Reibplatte (15) gegenüber dem Laufwerkrahmen (Achshalter 16) und/oder mittels eines im Laufwerkrahmen (Achshalter 16) quer zur Hauptfederungsrichtung verschiebbar gelagerten Stößels (17) gegenüber dem Achslagergehäuse (3) abgestützt sind.

6. Láufwerkfederung nach mindestens einem der Ansprüche 1 bis 5, dadurch gekennzeichnet, daß jeweils zwei Federn (4a,4b; 9a,9b) an beiden Seiten neben dem Achslagergehäuse (3) angeordnet sind.

7. Laufwerkfederung nach Anspruch 6, dadurch gekennzeichnet, daß mindestens ein Federpaar quer zur Hauptfederungsrichtung vorgespannt ist und die Vorspannkraft zur Erzeugung von Reibungskräften herangezogen wird.

8. Laufwerkfederung nach Anspruch 1, dadurch gekennzeichnet, daß die Federn als Wendelfedern (9a, 9b) aus Stahl hergestellt sind.

9. Laufwerkfederung nach Anspruch 1, dadurch gekennzeichnet, daß die Federn als Gummirollfedern (4a,4b) ausgebildet sind, die jeweils zwischen einem Dorn (5 bzw. 7) und einer Glocke (6 bzw. 8) angeordnet sind.

10. Laufwerkfederung nach Anspruch 9, dadurch gekennzeichnet, daß der Dorn (7) und die Glocke (6), die zwischen den beiden Gummirollfedern (4a,4b) angeordnet sind, miteinander derart verbunden sind, daß diese miteinander verbundenen Teile zusätzlich zur Bewegung in Hauptfederungsrichtung eine Pendelbewegung um eine beliebige, quer zur Hauptfederungsrichtung liegende Achse ausführen können.

**Claims**

1. Springing for the running gear of rail vehicles, the springing comprising two series-connected springs and a load-dependent friction damper, characterised in that both springs (4a, 4b; 9a, 9b) are preloaded transversely to the main springing direction with stressing of their springing properties effective transversely to the latter direction and this preloading force is used to produce friction forces providing load-dependent damping of only one spring (4b, 9b).

2. Springing according to claim 1, characterised in that the springs (4a; 4b; 9a, 9b) are disposed one above another and to preload the springs the bottom support (7, 11) of the top spring (4b, 9b), such support being disposed between the two springs, and the top support (6, 11) of the bottom spring (4a, 9a) are offset transversely of the main springing direction, for example, in the direction of travel, from the top support (8, 12) of the top spring (4b, 9b) and from the bottom support (5, 10) of the bottom spring (4a, 9a).

3. Springing according to claim 2, characterised in that the supports of the two springs (4a, 4b; 9a, 9b) are offset parallel to one another.

4. Springing according to claim 2, characterised in that the springs (4a, 4b; 9a, 9b) disposed one above another are pivoted relatively to the main springing direction in each case by an acute angle in opposite directions.

5. Springing according to at least one of claims 1, 2, 3 or 4, characterised in that the supports (6, 7; 11) which are disposed between the springs (4a, 4b; 9a, 9b) and which experience the preloading force bear by way of at least one friction plate (15) on the running gear frame (axle guide 16) and/or, by means of a tappet or the like (17) mounted in the running gear frame (axle guide 16) for movement transversely to the main springing direction, on the axle-box casing (3).

6. Springing according to at least one of claims 1–5, characterised in that two springs (4a, 4b; 9a, 9b) are disposed on both sides adjacent the axle-box casing (3).

7. Springing according to claim 6, characterised in that at least one spring pair is preloaded transversely to the main springing direction and the preloading force is used to produce friction forces.

8. Springing according to claim 1, characterised in that the springs are helical steel springs (9a, 9b).

9. Springing according to claim 1, characterised in that the springs are rubber scroll springs (4a, 4b) each disposed between a mandrel or the like (5, 7) respectively and a dome (6, 8) respectively.

10. Springing according to claim 9, characterised in that the mandrel (7) and the dome (6) disposed between the two rubber scroll springs (4a, 4b) are so interconnected as to be adapted to perform in addition to the movement in the main springing direction a rocking movement around any axis extending transversely to the main springing direction.

**Revendications**

1. Suspension de train de roues pour des véhicules ferroviaires comprenant deux ressorts montés en série et un amortisseur à friction dépendant de la charge, caractérisée en ce que les deux ressorts (4a, 4b; 9a, 9b) sont précontraints transversalement à la direction principale de suspension élastique sous la sollicitation de leurs propriétés élastiques agissant transversalement à la direction principale de suspension élastique, et en ce que cette force de précontrainte est utilisée pour la création de forces de friction qui n'amortissent, en fonction de la charge, qu'un ressort (4b, 9b).

2. Suspension de train de roues selon la revendication 1, caractérisée en ce que les ressorts (4a, 4b; 9a, 9b) sont superposés et que, pour réaliser la précontrainte des ressorts, l'appui inférieur (7, 11) du ressort supérieur (4b, 9b) et l'appui supérieur (6, 11) du ressort inférieur (4a, 9a), situés entre les deux ressorts, sont décalés par rapport à l'appui supérieur (8, 12) du ressort supérieur (4b, 9b) et l'appui inférieur (5, 10) du ressort inférieur (4a, 9a) transversalement à la direction principale de suspension élastique, par exemple dans la direction de la marche.

3. Suspension de train de roues selon la revendication 2, caractérisée en ce que les appuis des deux ressorts (4a, 4b; 9a, 9b) sont décalés parallèlement les uns aux autres.

4. Suspension de train de roues selon la revendication 2, caractérisée en ce que les ressorts superposés (4a, 4b; 9a, 9b) sont basculés respectivement d'un angle aigu en direction opposée par rapport à la direction principale de suspension élastique.

5. Suspension de train de roues selon l'une au moins des revendications 1, 2, 3 ou 4, caractérisée en ce que les appuis (6, 7; 11) situés entre les ressorts (4a, 4b; 9a, 9b) soumis à la force de précontrainte s'appuient contre le boîtier (3) de boîte d'essieu au moyen d'une plaque de friction (15) sur le cadre de train de roues (support d'essieu 16) et/ou au moyen d'un coulisseau (17) logé a coulissement transversalement à la direction principale de supension élastique dans le cadre de train de roues (support d'essieu 16).

6. Suspension de train de roues selon l'une au moins des revendications 1 à 5, caractérisée en ce que sont respectivement disposés deux ressorts (4a, 4b; 9a, 9b) sur les deux côtés à côté du boîtier (3) de boîte d'essieu.

7. Suspension de train de roues selon la revendication 6, caractérisée en ce qu'au moins une paire de ressorts est précontrainte transversalement, à la direction principale de suspension élastique et que la force de précontrainte est utilisée pour la création de forces de fiction.

8. Suspension de train de roues selon la revendication 1, caractérisée en ce que les ressorts sont constitués de ressorts hélicoïdaux (9a, 9b) en acier.

9. Suspension de train de roues selon la revendication 1, caractérisée en ce que les ressorts sont constitués de ressorts à rouleaux en caoutchouc (4a, 4b), qui sont respectivement disposés entre une broche (5 ou 7) et une cloche (6 ou 8).

10. Suspension de train de roues selon la revendication 9, caractérisée en ce que la broche (7) et la cloche (6), qui sont disposées entre les deux ressorts en rouleaux en caoutchouc (4a, 4b), sont reliées de telle façon que ces pièces reliées entre elles peuvent en outre exécuter, en plus du déplacement dans la direction principale de suspension élastique, un mouvement pendulaire autour d'un axe quelconque transversal à la direction principale de suspension élastique.

Fig. 1

Fig.2

Fig. 3

# Fig. 4

EP 0 280 099 B1